# EUROPEAN PATENT SPECIFICATION

(11) **EP 1 964 479 B1**
(45) Date of publication and mention of the grant of the patent: **15.05.2013**
(21) Application number: 07003110.9
(22) Date of filing: 14.02.2007
(51) Int. Cl.: A23L 1/00, A23L 1/0522, A23L 1/0524, A23L 1/053, A23L 1/0534, A23L 1/30

(54) **Process for the manufacture of a powder containing carotenoids**
Verfahren zur Herstellung von Pulver, das Karotenoide enthält
Processus de fabrication d'une poudre contenant des caroténoides

(43) Date of publication of application: 03.09.2008
(73) Proprietor: DSM IP Assets B.V., 6411 TE Heerlen (NL)
(72) Inventor: Leuenberger, Bruno H., 4123 Allschwil (CH); Schlegel, Bernd, 79618 Rheinfelden (DE); Voelker, Karl Manfred, 79111 Freiburg (DE)
(74) Representative: Rabanus, Birgit

(56) References cited:
- WO-A-91/06292
- WO-A-94/19411
- WO-A-2004/066750
- WO-A-2007/003543
- WO-A-2007/009601
- DE-A1-102004 046 026
- GB-A- 2 086 835
- US-A- 4 992 282
- US-B1- 6 500 473

## Description

The present invention relates to a process for the manufacture of a powder containing one or more carotenoids, furthermore it relates to the powder obtainable by said process, furthermore to a food composition, especially an instant beverage, containing said powder.

Carotenoids are a particularly useful source of coloring agents for a variety of foods and beverages. The carotenoids include carotene, lycopene, bixin, zeaxanthin, cryptoxanthin, canthaxanthin, lutein, beta-apo-8'-carotenal, beta-apo-12'-carotenal and can provide color pigments ranging from yellow to red. An especially important member of the carotenoid class is beta-carotene, because beta-carotene is not only useful as a colorant (typically yellow, orange and especially red in color) but also provides a valuable source of vitamin A. Most of the other carotenoids have also further beneficial properties in addition to their coloring capacity. For this reason, carotenoids are often included in foods and beverages as a colorant, especially where their further beneficial property, such as vitamin A fortification, is needed or desired.

WO 2007/003543 discloses a method for preparing an aqueous suspension and a powdered preparation of one or more carotenoids, comprising a) at least one carotenoid, b) at least one modified starch, c) sucrose, whereby the suspension or the powdered preparation comprises, based on the dry weight of the aqueous suspension or the total weight of the powdered preparation, 1 to 25 weight-% of at least one carotenoid and whereby the weight ratio of carotenoid a) to sucrose c) is 1:2 to 1:80.

WO 91/06292 discloses a process of preparing a hydrophobic/aerophilic solid which can be dispersed in water in the form of discrete microparticles, wherein the solid is milled in an aqueous medium in the presence of a hydrocolloid to obtain a suspension containing suspended particles of an average particle size not exceeding 10 µm and finely dividing and drying the suspension to obtain a powder.

US 6,500,473 discloses a composition comprising coloring substance bodies that are at least partially coated with beet pectin, chicory pectin and/or Jerusalem artichoke pectin or other pectin types having a high degree of acetylation. The composition which may be water dispersible is described as being useful for the preparation of health improving products and/or coloring products for use in the coloring of edible products including food products and nutraceuticals, and for coloring or pharmaceutical products.

Although in most applications both, the coloring effect and the further beneficial property, is desired, there are other applications where the intensive color of the carotenoids is an issue with regard to the desired color of the end product, especially when the other properties of the carotenoids are in the focus of the application.

It was therefore an object of the following invention, which is defined by the claims, to provide a powder containing one or more carotenoids wherein the powder in a preferred case should not have any noticeable coloring effect on the end product. Furthermore the powder should satisfy the usual demands of a food composition, such as being stable against oxidation, being and staying evenly distributed in the product over time and so on.

It has surprisingly been found that the object of the present invention is achieved by a process for the manufacture of a powder containing one or more carotenoids comprising the steps of
a) providing an aqueous solution of a polysaccharide;
b) forming a suspension of carotenoid(s) in the solution of step a);
c) milling the suspension of step b) until the mean particle size of the carotenoid particles is in the range of from about 0.6 µm to about 1.4 µm;
d) drying the suspension of step c),
characterized in that the amount of carotenoid(s) (one or more compounds) added in step b) is in the range of from 2 to 11 % by weight, based on the total weight of the suspension, and characterized in that the quantities of water and polysaccharide(s) (one or more compounds) in the aqueous solution of step a) are selected so that the amount of polysaccharide(s) in the suspension according to step b) of the present invention is in the range of from 15 to 25 % by weight, and the amount of water in said suspension is in the range of from 50 to 70 % by weight, each based on the total weight of the suspension.

It was not to be foreseen by the person skilled in the art that a powder obtainable by the process according to the present invention would solve the above mentioned issues.

Step a) of the process according to the present invention can be conducted at any reasonable temperature to ensure a rapid dissolution of the polysaccharide in water. To ensure complete dissolution of the polysaccharide within a reasonable amount of time, heating to about 40 to 80 °C is preferable.

The term "polysaccharide" as used herein includes acacia gum, pectins, celluloses, cellulose derivatives, and/or modified polysaccharides.

The term "modified polysaccharide" as used herein relates to polysaccharides which contain a lipophilic moiety, e. g. a hydrocarbon moiety having a chain length of preferably 5 to 18 carbon atoms in the straight chain. Preferably the modified polysaccharide should be acceptable for human consumption, i.e. preferred modified polysaccharides should be GRAS (generally recognized as safe) or approved for food consumption as determined by the various regulatory agencies world wide. A preferred modified polysaccharide is modified food starch.

The term "modified food starch" as used herein relates to modified starches that are made from starches substituted by known chemical methods with hydrophobic moieties. For example starch may be treated with cyclic dicarboxylic acid anhydrides such as succinic and/or glutaric anhydrides, substituted with an alkyl or alkenyl hydrocarbon group.

A particularly preferred modified starch of this invention has the following formula (I) 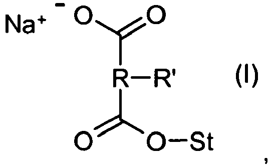 wherein St is a starch, R is an alkylene radical and R' is a hydrophobic group. Preferably R is a lower alkylene radical such as dimethylene or trimethylene. R' may be an alkyl or alkenyl group, preferably having 5 to 18 carbon atoms. A preferred modified starch of formula (I) is starch sodium octenyl succinate ("OSA-starch"). The term "OSA-starch" as used herein denotes any starch (from any natural source such as corn, wheat, tapioca, potatoe or synthesized) that was treated with octenyl succinic anhydride (OSA).The degree of substitution, i.e. the number of esterified hydroxyl groups with regard to the total number of hydroxyl groups usually varies in a range of from 0.1 % to 10 %, preferably in a range of from 0.5 % to 5 %, more preferably in a range of from 2 % to 4 %.

OSA-starches may contain further hydrocolloids, such as starch, maltodextrin, carbohydrates, gum, corn syrup etc. and optionally any typical emulsifier (as co-emulgator), such as mono- and diglycerides of fatty acids, polyglycerol esters of fatty acids, lecithins, sorbitan monostearate, and plant fibre or sugar.

OSA-starches are commercially available e.g. from National Starch under the trade names HiCap 100, Capsul, Capsul HS, Purity Gum 2000, UNI-PURE, HYLON VII; from Roquette Frères ; from CereStar under the tradename C*EmCap or from Tate & Lyle.

It is advantageous if the quantities of water and polysaccharide(s) (one or more compounds) in the aqueous solution of step a) are selected so that the amount of polysaccharide(s) in the suspension according to step b) of the present invention is in the range of from 10 to 25 % by weight, and the amount of water in said suspension is in the range of from 55 to 65 % by weight, each based on the total weight of the suspension.

According to the present invention it is advantageous if the amount of carotenoid(s) (one or more compounds) added in step b) is in the range of from 5 to 10 % by weight, each based on the total weight of the suspension.

In a preferred embodiment of the process of the present invention further adjuvants are added to the solution of step a) in step b). The further adjuvants are preferably selected from one or more of the following groups:
- diluents;
- antioxidants (fat-soluble or water-soluble);
- triglycerides (oils and/or fats);

Preferred diluents can be selected from glycerol, mono-, di- and oligosaccharides. According to the present invention sucrose, invert sugar, glucose, fructose, lactose, maltose, saccharose, sugar alcohols and starch hydrolysates, such as dextrins and maltodextrins are preferred. Maltodextrins are especially preferred.

According to the present invention it is advantageous if the amount of diluents (one or more compounds) in the suspension is in the range of from 5 to 20 % by weight, preferably from 10 to 15 % % by weight, each based on the total weight of the suspension.

Preferred water-soluble antioxidants are for example ascorbic acid or salts thereof, preferably sodium ascorbate. Preferred fat-soluble antioxidants are for example tocopherol (synthetic or natural); butylated hydroxytoluene (BHT); butylated hydroxyanisole (BHA); propyl gallate; tert. butyl hydroxyquinoline and/or ascorbic acid esters of a fatty acid, preferably ascorbyl palmitat and/or ascorbyl stearate. dl-Tocopherol is especially preferred.

According to the present invention it is advantageous if the amount of antioxidant(s) (one or more compounds) in the suspension is in the range of from 0.1 to 2 % by weight, preferably from 0.5 to 1.5 % by weight, each based on the total weight of the suspension.

The triglyceride is preferably selected from vegetable oils and/or fats, preferably corn oil, sunflower oil, soybean oil, safflower oil, rape seed oil, peanut oil, palm oil, palm kernel oil, cotton seed oil and/or coconut oil, including fractionated qualities thereof. The triglycerides can preferably be so-called MCT (medium chain triglycerides), i.e. ester of medium chain fatty acids (preferably saturated fatty acids with a chain length of 6 to 12 C atoms) and glycerol.

According to the present invention it is advantageous if the amount of triglyceride(s) (one or more compounds) in the suspension is in the range of from 0 to 5 % by weight, preferably from 0.2 to 2 % by weight, each based on the total weight of the suspension.

The milling step is preferably carried out with a commercially available ball mill. The desired mean particle size of the carotenoid particles is achieved by adjusting the following parameters with respect to each other: rotor speed (peripheral speed), mean residence time in the mill, material and size of the milling beads and load of the mill. Preferred is a low rotor speed (e.g. peripheral speeds of from 1 to 5 m/s, preferably from 2 to 4 m/s), a short mean residence time in the mill (e.g. 1 to 10 min), glass beads (e.g. with a mean diameter of 0.5 to 1.5 mm) and an average load of 70 to 90 %.

The preferred milling parameters may differ depending on the ball mill used in the milling step, but can easily be adjusted by the person skilled in the art through no inventive fault of his own.

Step c) of the process according to the present invention can be conducted at any reasonable temperature. Heating to about 40 to 60 °C is preferable.

The drying step may be carried out with any conventional drying process known to the person skilled in the art, preferred are spray drying and/or a powder catch process where sprayed suspension droplets are caught in a bed of an adsorbant such as starch or calcium silicate or silicic acid or calcium carbonate or mixtures thereof and subsequently dried.

According to the present invention it is advantageous if the residual moisture content in the powder obtained by the drying step is in the range of from 4 to 6 weight-%, based on the total weight of the powder.

In a preferred embodiment of the present invention the suspension of step c) is spray-dried. In this case it is preferred to select the spray drying parameters as follows:
- Air inlet: about 220 - 180 °C, especially about 200 °C;
- Air exit: about 100 - 70 °C, especially about 80 °C.

In a preferred embodiment of the process of the present invention one or more flow-conditioning agents (also referred to as anti-caking agents, flow enhancer) are added to the powder, i.e. during the drying step or to the product that is obtained in step d).

Preferred flow-conditioning agents are for example (hydrophilic) fumed silica, such as those commercially available under the trade name AEROSIL® from Degussa.

According to the present invention it is advantageous if the amount of flow-conditioning agent(s) (one or more compounds) in the powder is in the range of from 0.1 to 0.5 % by weight, based on the total weight of the powder.

The present invention is also directed to the powder (dry powder, beadlet or granul(at)e) obtained by the process of the present invention as disclosed above. Furthermore the present invention is further directed to powders having the same properties but obtained by different processes, i.e. powders obtainable according to the process of the present invention.

The present invention is further directed to a food composition, especially to a beverage containing the powder obtained/obtainable by the described process. The beverage of the present invention may be a base composition to which upon its use water or another liquid beverage composition (such as milk, juice and so on) can or has to be added. The base composition can be prepared as a dry, powder product (instant beverage) which before its consumption is to be mixed with water or another liquid beverage composition, as a concentrate to which water or another liquid beverage composition has to be added, or as a beverage to which no liquid needs to be added.

The amount of powder according to the invention which is to be added to a food composition depends on the potency of said powder, i.e. the amount of carotenoid(s) in the powder, which according to the present invention can range from about 10 to about 20 % by weight, preferably from about 15 to about 20 % by weight, each based on the total weight of the powder.

In the case of clear beverages, the preferred beverage should have an optical clarity which does not differ significantly from its optical clarity before addition of the powder, for example which does not appear significantly more turbid on visual inspection.

It was not to be foreseen by the person skilled in the art that addition of the powder according to the present invention to water or another liquid beverage composition (such as milk, juice and so on) would not change the color of the liquid, i.e. would not have a coloring effect visible to the naked eye on the beverage.

Effervescent tablets comprising the powder of this invention are also part of this invention. The tablets of this invention may also be dissolved in a liquid without changing the color with regard to a similar effervescent tablet not containing the powder according to the present invention.

The invention is further illustrated by the following examples.

### Examples:

### Example 1

300.0 g water is heated to 80 °C. 100.0 g Capsul (OSA-starch) is added and stirred for 90 min. at 80 °C. Then 50.0 g Maltodextrin, 2.0 g corn oil, 4.0 g dl-α-Tocopherol, and 36.0 g Beta Carotene cryst. are added and stirred for 30 min.
The low-viscous crude suspension is transferred to a commercial agitated ball mill. The temperature is adjusted to 50 °C and the milling process is carried out until a mean particle size of 0.9 µm is achieved. Finally, the milled suspension is dried in a Niro atomizer. Air inlet: 200 °C, air outlet: 80 °C.
A reddish powder is obtained, which contains 17.2% (w/w) of Beta-Carotene. The color intensity (E1%1cm) is 0.

### Example 2

300.0 g water is heated to 80 °C. 100.0 g Capsul (OSA-starch) is added and stirred for 90 min. at 80 °C. Then 52.0 g Maltodextrin, 4.0 g dl-α-Tocopherol, and 36.0 g Beta Carotene cryst. are added and stirred for 30 min.
The low-viscous crude suspension is transferred to a commercial agitated ball mill. The temperature is adjusted to 50 °C and the milling process is carried out until a mean particle size of 0.6 µm is achieved. Finally, the milled suspension is dried in a Niro atomizer. Air inlet: 200 °C, air outlet: 80 °C.
A reddish powder is obtained, which contains 17.8% (w/w) of Beta-Carotene. The color intensity (E1%1cm) is 22.

## Claims

1. Process for the manufacture of a powder containing one or more carotenoids comprising the steps of
a) providing an aqueous solution of a polysaccharide;
b) forming a suspension of carotenoid(s) in the solution of step a);
c) milling the suspension of step b) until the mean particle size of the carotenoid particles is in the range of from about 0.6 µm to about 1.4 µm;
d) drying the suspension of step c),
**characterized in that** the amount of the one or more carotenoid compound(s) added in step b) is in the range of from 2 to 11 % by weight, based on the total weight of the suspension, and
**characterized in that** the quantities of water and the one or more polysaccharide compound(s) in the aqueous solution of step a) are selected so that the amount of polysaccharide(s) in the suspension according to step b) of the present invention is in the range of from 15 to 25 % by weight, and the amount of water in said suspension is in the range of from 50 to 70 % by weight, each based on the total weight of the suspension.

2. Process according to claim 1 **characterized in that** the polysaccharide is selected from acacia gum, pectins, celluloses, cellulose derivatives and/or modified polysaccharides.

3. Process according to any of the preceding claims **characterized in that** the polysaccharide is selected from modified polysaccharides.

4. Process according to any of the preceding claims **characterized in that** in step b) further adjuvants selected from one or more of the following groups of diluents; antioxidants, such as fat-soluble or water-soluble antioxidants; triglycerides such as oils and/or fats are added to the solution of step a).

5. Process according to any of the preceding claims **characterized in that** the milling step is carried out with a ball mill.

6. Process according to any of the preceding claims **characterized in that** the drying step is a spray drying step.

7. Powder obtainable by a process according to any of the preceding claims.

8. Food, beverage or pharmaceutical preparation containing a powder according to claim 7.

9. Beverage containing a powder according to claim 7.

10. Dry, powder instant beverage product which before its consumption is to be mixed with water or another liquid beverage composition, said instant beverage containing a powder according to claim 7.

## Patentansprüche

1. Verfahren zur Herstellung eines Pulvers, das ein oder mehrere Carotinoide enthält, wobei das Verfahren die folgenden Schritte umfasst:
a) Bereitstellen einer wässrigen Lösung eines Polysaccharids;
b) Bilden einer Suspension des Carotinoids bzw. der Carotinoide in der Lösung von Schritt a);
c) Mahlen der Suspension von Schritt b), bis die mittlere Teilchengröße der Carotinoidteilchen im Bereich von ungefähr 0,6 µm bis ungefähr 1,4 µm liegt;
d) Trocknen der Suspension von Schritt c),
**dadurch gekennzeichnet, dass** die Menge an der einen Carotinoidverbindung bzw. der mehreren Carotinoidverbindungen, die in Schritt b) hinzugefügt wird, im Bereich von 2 bis 11 Gew.-% in Bezug auf das Gesamtgewicht der Suspension liegt, und
**dadurch gekennzeichnet, dass** die Mengen an Wasser und der einen Polysaccharidverbindung bzw. der mehreren Polysaccharidverbindungen in der wässrigen Lösung von Schritt a) so ausgewählt werden, dass die Menge an Polysaccharid(en) in der Suspension gemäß Schritt b) der vorliegenden Erfindung im Bereich von 15 bis 25 Gew.-% liegt und die Wassermenge in der Suspension im Bereich von 50 bis 70 Gew.-%, jeweils in Bezug auf das Gesamtgewicht der Suspension, liegt.

2. Verfahren nach Anspruch 1, **dadurch gekennzeichnet, dass** das Polysaccharid aus der Reihe Akaziengummi, Pektine, Cellulosen, Cellulosederivate und/oder modifizierte Polysaccharide ausgewählt ist.

3. Verfahren nach einem der vorhergehenden Ansprüche, **dadurch gekennzeichnet, dass** das Polysaccharid aus modifizierten Polysacchariden ausgewählt ist.

4. Verfahren nach einem der vorhergehenden Ansprüche, **dadurch gekennzeichnet, dass** in Schritt b) die Lösung von Schritt a) mit weiteren Hilfsstoffen, ausgewählt aus einer oder mehreren der folgenden Gruppen von Verdünnungsmitteln: Antioxidantien, wie fettlöslichen oder wasserlöslichen Antioxidantien, Triglyceriden wie Ölen und/oder Fetten, versetzt wird.

5. Verfahren nach einem der vorhergehenden Ansprüche, **dadurch gekennzeichnet, dass** der Mahlschritt mit einer Kugelmühle durchgeführt wird.

6. Verfahren nach einem der vorhergehenden Ansprüche, **dadurch gekennzeichnet, dass** es sich bei dem Trocknungsschritt um einen Sprühtrocknungsschritt handelt.

7. Pulver, das nach einem Verfahren nach einem der vorhergehenden Ansprüche erhältlich ist.

8. Nahrungsmittel, Getränk oder pharmazeutisches Präparat, das ein Pulver nach Anspruch 7 enthält.

9. Getränk, das ein Pulver nach Anspruch 7 enthält.

10. Trockenes, pulverförmiges Instant-Getränkprodukt, das vor seinem Verzehr mit Wasser oder einer sonstigen flüssigen Getränkzusammensetzung zu vermischen ist, wobei das Instant-Getränk ein Pulver nach Anspruch 7 enthält.

## Revendications

1. Procédé de fabrication d'une poudre contenant un ou plusieurs caroténoïdes, comprenant les étapes consistant à :
a) fournir une solution aqueuse d'un polysaccharide ;
b) former une suspension de caroténoïde(s) dans la solution de l'étape a) ;
c) broyer la suspension de l'étape b) jusqu'à ce que la taille moyenne de particules des particules de caroténoïde se trouve dans la plage allant d'environ 0,6 µm à environ 1,4 µm ;
d) sécher la suspension de l'étape c) ;
**caractérisé en ce que** la quantité du un ou plusieurs composés de caroténoïde ajoutés dans l'étape b) se trouve dans la plage allant de 2 à 11% en poids, sur la base du poids total de la suspension, et
**caractérisé en ce que** les quantités d'eau et du un ou plusieurs composés de polysaccharide dans la solution aqueuse de l'étape a) sont choisies de sorte que la quantité de polysaccharide(s) dans la suspension selon l'étape b) de la présente invention se trouve dans la plage allant de 15 à 25% en poids, et que la quantité d'eau dans ladite suspension se trouve dans la plage allant de 50 à 70% en poids, chacune basée sur le poids total de la suspension.

2. Procédé selon la revendication 1, **caractérisé en ce que** le polysaccharide est choisi parmi la gomme arabique, les pectines, les celluloses, les dérivés de cellulose et/ou les polysaccharides modifiés.

3. Procédé selon l'une quelconque des revendications précédentes, **caractérisé en ce que** le polysaccharide est choisi parmi les polysaccharides modifiés.

4. Procédé selon l'une quelconque des revendications précédentes, **caractérisé en ce que** dans l'étape b), d'autres adjuvants choisis parmi un ou plusieurs des groupes suivants de diluants ; d'antioxydants, tels que les antioxydants solubles dans les matières grasses ou solubles dans l'eau ; de triglycérides tels que les huiles et/ou les matières grasses ; sont ajoutés à la solution de l'étape a).

5. Procédé selon l'une quelconque des revendications précédentes, **caractérisé en ce que** l'étape de broyage est effectuée dans un broyeur à boulets.

6. Procédé selon l'une quelconque des revendications précédentes, **caractérisé en ce que** l'étape de séchage est une étape de séchage par pulvérisation.

7. Poudre pouvant être obtenue par un procédé selon l'une quelconque des revendications précédentes.

8. Aliment, boisson ou préparation pharmaceutique contenant une poudre selon la revendication 7.

9. Boisson contenant une poudre selon la revendication 7.

10. Produit de boisson instantanée en poudre, sec, qui doit être mélangé avant sa consommation avec de l'eau ou une autre composition de boisson liquide, ladite boisson instantanée contenant une poudre selon la revendication 7.
